# EUROPÄISCHE PATENTSCHRIFT

(11) **EP 1 426 265 B1**
(45) Veröffentlichungstag und Bekanntmachung des Hinweises auf die Patenterteilung: **01.04.2009**
(21) Anmeldenummer: 03405862.8
(22) Anmeldetag: 04.12.2003
(51) Int. Cl.: B62B 5/00

(54) **Hülle mit Transportvorrichtung an einem faltbaren Zelt**
Cover with transport device on a folded tent
Emballage avec dispositif de transport pour tente pliée

(30) Priorität: 05.12.2002 CH 20622002
(43) Veröffentlichungstag der Anmeldung: 09.06.2004
(73) Patentinhaber: PATEA GmbH, 6300 Zug (CH)
(72) Erfinder: Heinz Stöckler, 8630 Rüti (CH)
(74) Vertreter: Schneider Feldmann AG Patent- und Markenanwälte

(56) Entgegenhaltungen:
- EP-A1- 0 514 574
- WO-A-02/08043
- DE-U1- 29 816 515
- FR-A1- 2 703 435
- US-A- 1 757 490
- US-A- 2 375 338
- US-A1- 2002 167 138

## Beschreibung

Die Erfindung betrifft eine Hülle mit Transportvorrichtung für ein gefaltetes Zelt.

Faltbare Zelte sind u.a. in der EP-A-0'514'574 beschrieben und werden für eine Reihe von Anwendungen eingesetzt. Sie sind als Partyzelte im Garten, als Marktzelte zum Schutz der Ware gegen Sonne und Regen und an Ausstellungen zur Aufbewahrung von Waren und Werbematerial geeignet.

Solche Zelte werden meistens in einer langen Tragtasche zum Aufstellungsort getragen. Je nach Grösse des Zeltes und der zurückzulegenden Distanz kann das Tragen dieser Tasche sehr beschwerlich sein. Wenn man sich eine mehr als hundert Meter lange Ausstellungshalle vorstellt, die weit von einem Parkplatz entfernt ist kann das Tragen der Tasche äusserst beschwerlich sein, da das Gewicht des Zeltes von etwa 25 bis 50 kg variiert. Solche Gewichte sind für Damen oder Personen mit Rückenproblemen eine sehr starke Belastung.

Eine weitere Anwendung sind Grossanlässe mit vielen Gästen, wie z.B. eine Hochzeitsgesellschaft in einem Garten. In einem solchen Fall werden viele Zelte benötigt, die von einem Ort zu einem anderen transportiert werden müssen. Es ist dabei sehr oft anstrengend, die Zelte, die z.B. von einem Lastwagen angeliefert werden, in einer Tragtasche bis zum Aufstellungsort zu tragen.

Bei einem in einer Tasche angeliefertes Zelt muss vor dem Aufstellen zuerst der Reissverschluss oder das Klettband betätigt werden und dann das Zelt aus der Tasche herausgenommen werden und kann erst dann aufgestellt werden. Dabei muss das Zelt um 180° gedreht werden, damit die beiden Zeltenden nacheinander aus der Tragtasche freikommen. Da das Zelt nicht nur ein relativ hohes Gewicht, sondern auch eine Länge von etwa 1,50 m hat, ist dieser Drehvorgang recht beschwerlich.

WO 02/08043 A1 zeigt eine Transportvorrichtung für ein gefaltetes Zelt, mit einer rechtwinkligen Platte und zwei daran angeordneten Rädern. An einer horizontalen Platte des L-förmigen Profils sind zwei Stifte angeordnet, die derart gestaltet sind, dass sie formschlüssig in Öffnungen am unteren Ende von hohlen Eckpfosten eines gefalteten Zeltes eingreifen.

FR 2703435 zeigt eine Transportvorrichtung für Gasflaschen, mit einem starren Körper mit einer vertikalen Wand, deren Form an die Gestalt der Gasflasche angepasst ist. Der Körper verfügt über einen horizontal hervorstehenden, unteren Rand, auf dem die zu transportierende Gasflasche aufliegt, mit zwei Vorsprüngen welche in eine kreisförmige Vertiefung im Boden der Glasflasche eingreifen. Am Körper ist ein Band befestigt, mit welchem die Gasflasche mit der Transportvorrichtung formschlüssig verbunden werden kann.

Aufgabe der Erfindung ist somit die Schaffung einer Hülle mit Transportvorrichtung an einem faltbaren Zelt, die leicht montier- und demontierbar ist. Dabei ist es wichtig, dass das Aufstellen des Zeltes nur eine Person erfordert.

Diese Aufgabe ist erfindungsgemäss durch die Merkmale im Kennzeichnungsteil des ersten Patenanspruches gelöst.

Ausführungsformen sind in den abhängigen Ansprüchen umschrieben.

Die Hülle mit Transportvorrichtung ist insbesondere für den Einsatz in den obengenannten Fällen vorgesehen und soll lösbar an einem zusammengefalteten Zelt befestigbar sein. Ferner soll die Hülle mit Transportvorrichtung je nach Bedarf, wenn sie von einem Zelt entfernt ist, schnell von einer Person auf ein anderes Zelt montiert werden können.

Die Hülle wird über das zusammengefaltete Zelt gelegt und mittels Reissverschluss oder Klettband geschlossen. Diese gepolsterte Hülle wird für den Transport als auch für den Staubschutz für das Zelt während der Lagerung verwendet. Die Vorrichtung soll sowohl für den Transport in Freiluft, d.h. über eine wiese, als auch in einer Halle mit Teppich- oder Betonboden geeignet sein.

Die Transportvorrichtung ist mit mindestens zwei Rädern ausgestattet, die bei Lagerung entfernt werden können und in eine, Kammer oben auf der Hülle aufbewahrt werden. Diese Kammer ist vorzugsweise mittels eines Reissverschlusses oder eines Klettbandes geschlossen.

Es wird davon ausgegangen, dass die Transportvorrichtung gemäss einer bevorzugten Ausführungsform nur zwei Räder hat, so dass das zusammengefaltete Zelt geneigt ähnlich wie ein Einkaufswagen oder auch ein Reisekoffer in der Schräglage gestossen oder gezogen wird.

Die Räder sollen grösser als an einem fahrbaren Koffer sein, damit das Zelt mit Hülle nicht nur auf geteerten Strassen oder Betonboden, sondern auch im Gelände, d.h. im Garten und auf Grünflächen geschoben oder gestossen werden kann.

Nachfolgend werden Ausführungsbeispiele des Gegenstandes der Erfindung anhand der Zeichnung näher erläutert. Es zeigen:
- Fig. 1: eine schaubildliche Darstellung der Hülle mit Transportvorrichtung, wobei der Reissverschluss geöffnet und die Räder weggelassen sind;
- Fig. 2: wie Fig. 1, jedoch oben mit geöffneter Kammer für Räder, wobei zwei Räder montiert sind und das zusammengefaltete Zelt in der Hülle dargestellt ist;
- Fig. 3: eine Teilansicht einer geschlossene Hülle mit Transportvorrichtung gemäss einer Ausführungsform mit gefaltetem Zelt zum Ziehen,
- Fig. 4: eine Ansicht der Transportvorrichtung gemäss einer weiteren Ausführungsform vor dem Anbau, von Vorne,
- Fig. 5: eine schaubildliche Darstellung der Transportvorrichtung nach Figur 4, mit Teilen eines Zeltgestänges;
- Fig. 6: eine schaubildliche Darstellung der Hülle mit Transportvorrichtung gemäss Figur 4,
- Fig. 7: wie Fig. 6, jedoch von unten,
- Fig. 8: wie Fig. 5, jedoch ohne Zeltteile, und
- Fig. 9: wie Fig. 8, jedoch ohne Räder.

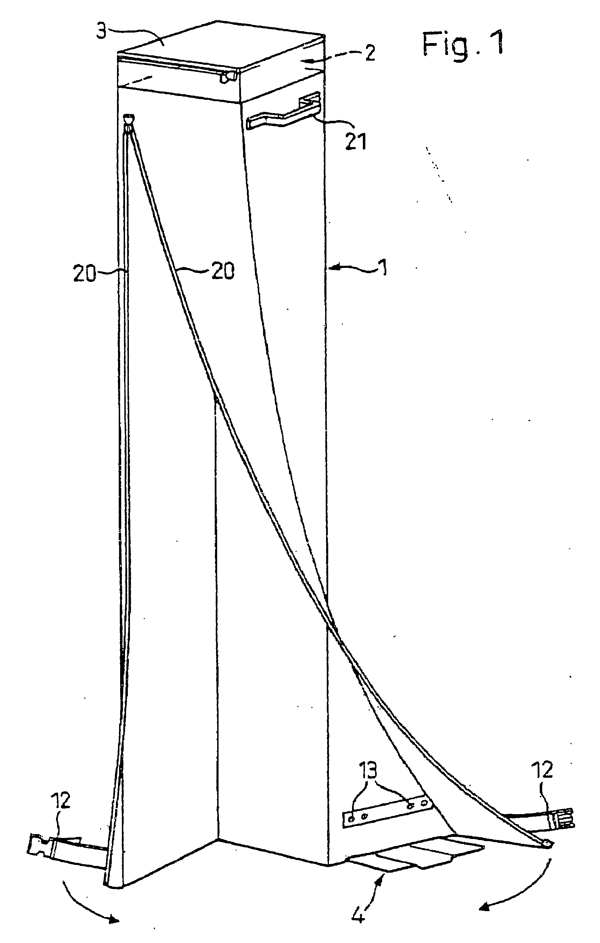

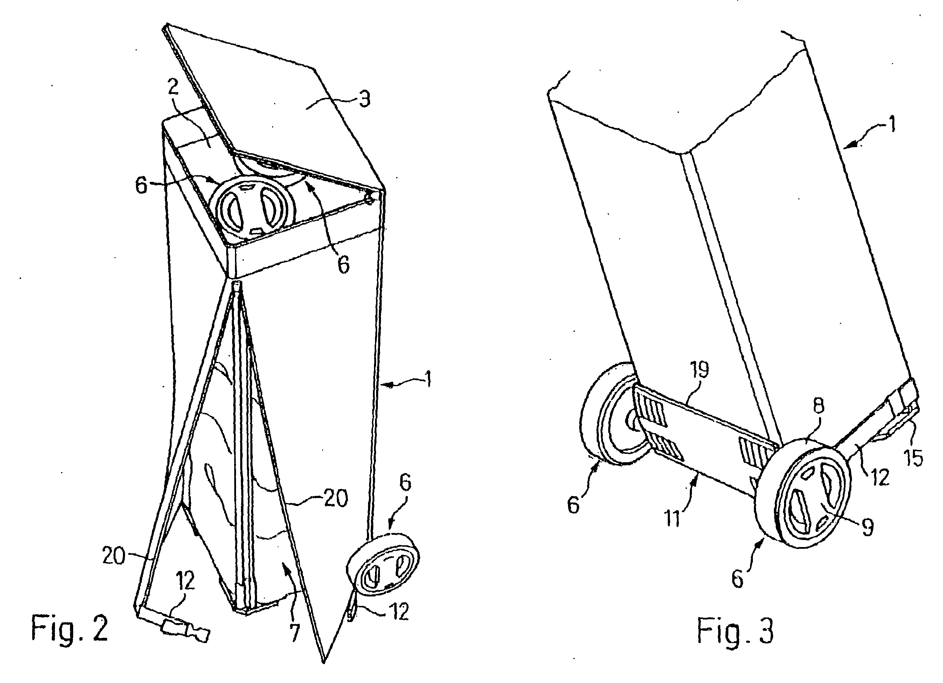

Figuren 1 und 2 zeigen eine Hülle 1 mit Transportvorrichtung gemäss einer ersten Ausführungsform der Erfindung, mit einer oberen Kammer 2 zur Aufnahme von Rädern 6, die mit einem Deckel 3 verschlossen ist. In der Fig. 1 ist nur eine Horizontalplatte 4 der Transportvorrichtung 5 sichtbar, welche dazu dient, für den Transport eines zusammengeklappten Zeltes unter das Zelt geschoben zu werden. Ein zusammengefaltetes Zelt 7 ist zum Beispiel in der Fig. 2 angedeutet, die auch eines der beiden Räder 6 im montierten Zustand an der Transportvorrichtung 5 zeigt. Zudem werden in Fig. 2 zuoberst in der Kammer 2 zwei Ersatzräder 6 gezeigt. Normalerweise werden aber nur zwei Räder 6 pro zusammen gefaltetes Zelt 7 verwendet, das in einer Schräglage transportiert wird, wie dies in Fig. 3 angedeutet ist.

Ein zusammengefaltetes Zelt 7 steht in der Regel aufrecht auf vier Füssen 15. Wie bereits erwähnt musste es zum Verpacken bisher umgelegt und mehrmals angehoben werden, bis es in einer Hülle oder Tasche verpackt war. Durch die neue Vorrichtung werden das Umlegen und Anheben des Zeltes unnötig. Die an der Unterseite offene Hülle 1, lässt sich vorzugsweise mittels eines Reissverschlusses 20 in Längsrichtung annähernd vollständig öffnen. In diesem geöffneten Zustand kann Sie bequem um das Zelt 7 gelegt werden. Im nächsten Schritt wird die mindestens eine Horizontalplatte 4 unter das Zelt geschoben und der Reisverschluss 20 und ein Band 12 geschlossen. Falls dies nicht schon geschehen ist, werden die Räder 6 mit wenigen Handgriffen an der Transportvorrichtung 5 montiert. Ohne dass das Zelt 7 umgelegt oder angehoben werden musste steht es nun fertig verpackt zum Abtransport bereit. Dazu wird es an einem Handgriff 21 gefasst, in eine Schräglage gekippt und wie zum Beispiel ein bekannter Rollkoffer weggezogen.

Die Räder 6 bestehen vorzugsweise aus einem äusseren Ring 8 und einem Griffteil 9, der in der dahinterliegenden Nabe 10 eingeschraubt ist (Figuren 3, 4, 5). Beim Ziehen oder Schieben der Transportvorrichtung 5 bleibt der Griffteil 9 fest, während der Ring 8 rotiert.

Aus Fig. 1, 8 und 9 ist ersichtlich, dass die Transportvorrichtung 5 ein L-Profil 11 und als Befestigungsmittel das Band 12 umfasst, das rund um das gefaltete Zelt 7 derart festgezogen oder befestigt ist, so dass ein unterer Bereich der Hülle 1, des gefalteten Zeltes 7 und die Transportvorrichtung 5 beim Transport fest zusammengehalten werden. Löcher 13 in der Hülle 1 sind mit Löchern 14 im L-Profil 11 ausgerichtet und können mit Schrauben oder ähnlichen Befestigungsmitteln derart lösbar verbunden werden, dass eine gegenseitige Verschiebung der Hülle 1 und der Transportvorrichtung 5 verunmöglicht wird. In weiteren, in den Figuren nicht dargestellten, Ausführungsformen der Erfindung ist die Transportvorrichtung 5 an der Hülle 1 mittels Klettelementen, Kleben oder Schweissen befestigt. Wesentlich für die vorliegende Erfindung ist es, dass das Gestänge des zu transportierenden Zeltes dazu genutzt wird, eine nicht weiter verstärkte Hülle 1 und eine daran befestigbare Transportvorrichtung 5 zu einer stabilen, gut transportierbaren Einheit zu kombinieren. Das L-Profil 11 wird analog zu einem Sackkarren unter das zusammengefaltete Zelt geschoben, und mittels des Bandes 12 am zusammengefalteten Zelt in Position gehalten. Beim Transport des Zeltes verhindert die Horizontalplatte 4 dass das innenliegende Zelt 7 nach unten aus der Hülle 1 rutschen kann. Wird die Hülle 1 mit innenliegendem Zelt 7 gekippt und am Handgriff 21 gezogen, so drückt Gewicht des Zeltes 7 nach unten gegen die Horizontalplatte 4. Ein Wegkippen der Horizontalplatte 4 wird von der Vertikalplatte 19 verhindert, die mittels Band 12 am Zeltgestänge gehalten und dadurch kippsicher befestigt ist. Das Zeltgestänge dient als Widerlager für die Vertikalplatte 19 und das Band 12 als Befestigungsmittel, welches die Vertikalplatte 19 am Gestänge hält.

Die Befestigungsmittel können gemäss weiterer Ausführungsformen der vorliegenden Erfindung zum Beispiel Klemmelemente umfassen, welche vorzugsweise so an der Vertikalplatte 19 angeordnet sind, dass sie in die Längsnuten 29 der Eckpfosten 28 eingeführt und dort festgeklemmt werden können. Ist der untere Bereich der Hülle 1 und das Verschlussmittel, zum Beispiel der Reissverschluss 20, eng genug und stabil genug angefertigt, so können diese als Befestigungsmittel dienen. Das Befestigungsmittel muss auf jeden Fall sicherstellen, dass das zusammengeklappte Zelt so an der Transportvorrichtung gehalten ist, dass diese nicht verkippen kann und das Zelt nicht von der Horizontalplatte 4 abrutschen kann.

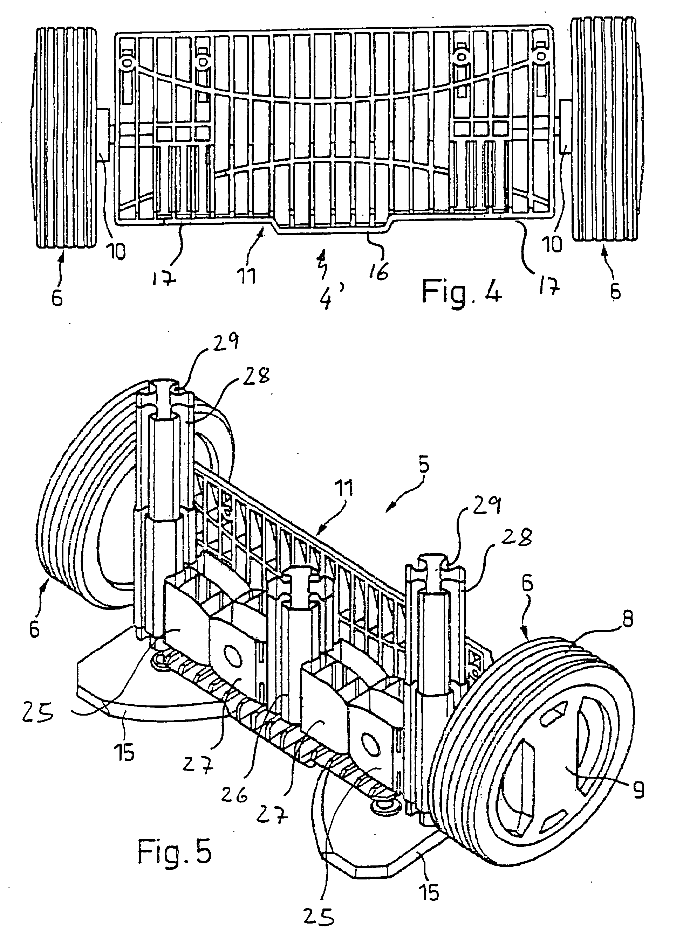

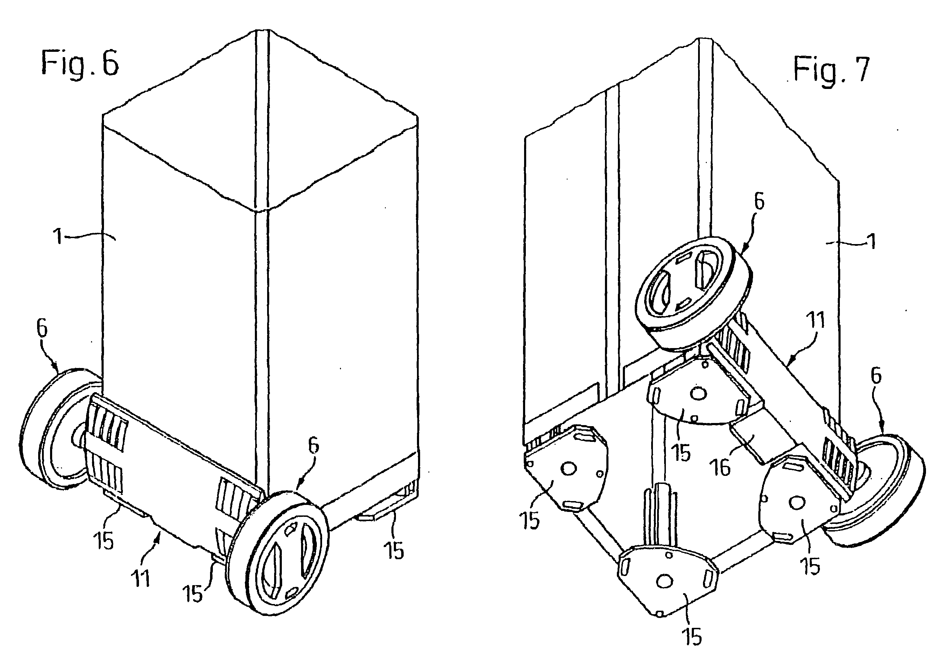

In Fig. 7 sind in einer Ansicht von unten alle vier Füsse 15 des gefalteten Zeltes 7 sichtbar, da das L-Profil 11 der Transportvorrichtung 5 eine weitere vorteilhafte Ausgestaltung aufweist. In der Figur 4 ist dargestellt, dass die Horizontalplatte 4' in zwei seitlichen Bereichen 17 leicht nach oben versetzt ist. Ein zentraler Bereich 16 liegt tiefer und erstreckt sich fast bis zum Boden hin. Aus der Figur 5 geht hervor, dass sich diese Horizontalplatte so unter ein Gestänge des zusammengefalteten Zeltes schieben lässt, dass nicht mehr die Füsse 15, sondern die Profilgleiter 25, Verbindungs- 27 und Knotenelemente 26 untergriffen werden. Die Horizontalplatte erstreckt sich nicht mehr über die gesamte Breite der Transportvorrichtung, sondern lässt Raum für die Eckpfosten 28 des Zeltgestänges.
Aus den Figuren geht hervor, dass die Horizontalplatten 4, 4' generell das Zelt nur teilweise untergreifen. Ausgehend von der Vertikalplatte 19 erstreckt sich die Horizontalplatte 4, 4' vorzugsweise mindestens so weit unter das Zelt, dass die Eckpfosten 28 und/oder die Anteile des Zeltgestänges 25, 26, 27 einer Zeltseite untergriffen werden.

Das vorzugsweise aus Kunststoff gespritzte Profil 11 ist mit einer Anzahl von Rippen bzw. Verstärkungen versehen, die dazu dienen, die Festigkeit des L-Profils oder Winkelprofils 11 bei geringem Gewicht zu erhöhen. Verstärkungsrippen 18 auf der Horizontalplatte 4' stehen senkrecht und sind im zentralen Bereich 16 höher als an den Seiten 17, so dass sie insgesamt eine funktional einheitliche obere horizontale Auflagefläche definieren.

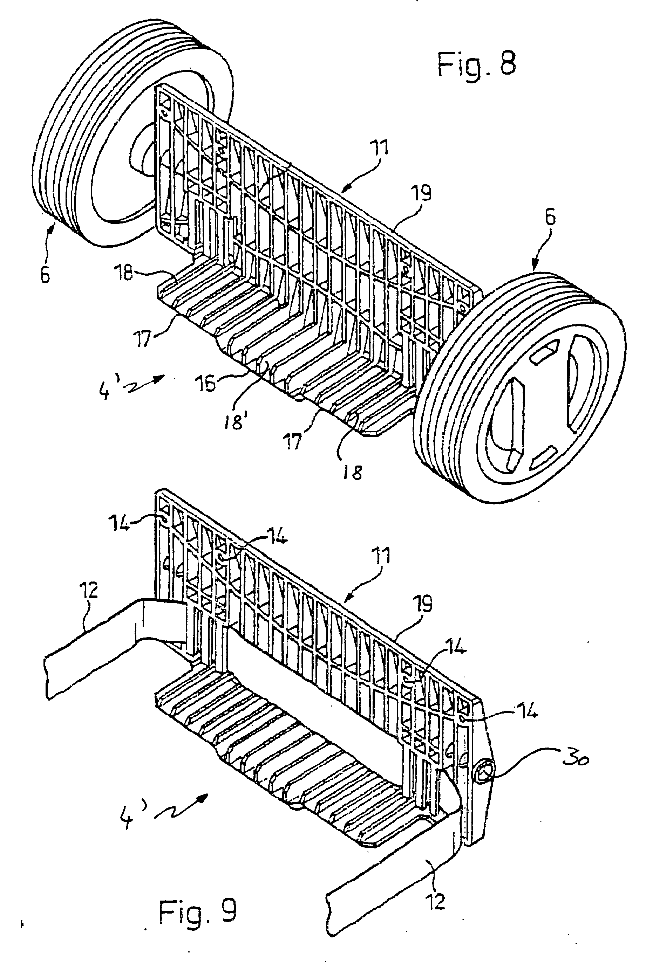

In bevorzugten Ausführungsformen der vorliegenden Erfindung sind die Räder 6 so dimensioniert und so an den Transportvorrichtungen gemäss der Figuren 8 und 9 positioniert, dass sie im montierten Zustand beim verpackten und aufrecht stehenden Zelt den Boden gerade nicht berühren. Die Aufnahmeöffnung 30 für die Radachse ist also um mehr als den Raddurchmesser vom Boden entfernt. Die Räder lassen sich dadurch montieren und demontieren, ohne dass das Zelt an einer Unterseite angehoben oder gekippt werden muss. Die Gefahr dass das zusammengeklappte Zelt bei der Montage der Räder umfällt wird dadurch gänzlich vermieden. Wird das verpackte Zelt dann am Handgriff 21 der Hülle 1 gefasst und zum Transport gekippt, so kommen die Räder in Kontakt mit dem Boden und ein Ziehen oder Schieben ist problemlos möglich.

Zum Anbringen der Hülle 1 mit Transportvorrichtung 5 wird das Zelt 7 wiederum zuerst zusammengefaltet und dann die Hülle 1 darüber gezogen, wobei der Abschnitt 16 des L-Profils 11 unter dem Zelt 7, zwischen zwei Füssen 15 zu liegen kommt. Die sich vertikal erstreckende Profil-Wand 19, die bereits mit der Hülle 1 verbunden ist, verhindert, dass sich die Hülle 1 nach oben verschieben kann (Fig. 6, 7). Danach wird der Reissverschluss 20 nach unten gezogen und das Band 12 rund um die Hülle 1 gelegt und gut angezogen, Schliesslich wird die Kammer 2 zuoberst geschlossen, wobei unter Umständen die zwei Räder 6 zuerst montiert werden, damit das Zelt 7 bereits fahrbereit ist. Zum Schliessen der Kammer 2 wird ein Reissverschluss oder ein Klettband benutzt.

In diesem Zustand wird das Zelt 7 gelagert bis es benötigt wird, wobei die Räder 6 bereits montiert werden können oder man diese in der oberen Kammer lagern kann. Die Aufbewahrung in der oberen Kammer hat den Vorteil, dass die Räder sauber gehalten werden können, was sich beim Ziehen oder Schieben vorteilhaft auswirkt

Ein wichtiger Vorteil dieser Hülle mit Transportvorrichturig ist darin begründet, dass eine Einzelperson die Aufstellung des Zeltes bewerkstelligen kann, was bei der Aufbewahrung in einer Tragtasche nicht ohne weiteres möglich ist. Aber nicht nur die Montage (Aufstellung) des Zeltes, sondern auch das Zusammenfalten (Verpacken) des Zeltes kann bei der Verwendung der Hülle mit Transportvorrichtung von einer einzigen Person bewältigt werden.

Zuoberst ist die Hülle mit je einem Handgriff 21 auf beide Seiten versehen, die dazu dienen das Zelt 7 in einer Schräglage zu fahren.

Normalerweise sind zwei Räder für jedes gefaltete Zelt vorgesehen, das in einer Schräglage gezogen oder verschoben wird. Bei grösseren Zelten kann es aber zweckmässig sein, statt zwei, vier Räder zu verwenden. In einer solchen Ausführungsform umfasst die Transportvorrichtung zwei L-Profile die vorzugsweise an gegenüberliegenden Seiten des Zeltes angeordnet werden. Diese Ausführung wird vorzugsweise in vertikaler Lage, also stehend, statt in Schräglage bewegt. Die Grösse und Position der Räder ist in diesen Ausführungsformen, wie in der Figur 4 angedeutet, so gewählt, dass Aufnahmeöffnung für die Radachsen an der Transportvorrichtung 5 im montierten Zustand um weniger als den Raddurchmesser vom Boden entfernt sind. Die Transportvorrichtung hebt das Zelt also im verpackten Zustand insgesamt leicht vom Boden ab. Um die Räder zu montieren wird das aufrecht stehende Zelt an einer Unterkante jeweils ganz angehoben und damit gekippt.

Die vorhin erwähnte Hülle 1 ist deshalb leicht auf das Zelt 7 zu montieren, weil sie wie ein Mantel oder Kappe ausgebildet ist, die einfach über das Zelt geworfen, respektive um das Zelt gelegt wird.
Sie erfordert deshalb beim Anbringen auf das Zelt nicht, dass das Zelt zum Anbringen oder Entfernen um 180° gedreht wird, wie dies bei der Tragtasche der Fall ist.

### Liste der Bezugszahlen

- 1: Hülle
- 2: Kammer
- 3: Deckel
- 4, 4': Horizontalplatte
- 5: Transportvorrichtung
- 6: Rad
- 7: Zelt
- 8: Ring
- 9: Griffteil
- 10: Nabe/Achse
- 11: L-Profil
- 12: Band
- 13: Löcher (in der Hülle 1)
- 14: Löcher (im L-Profil)
- 15: Fuss
- 16: zentraler Bereich
- 17: Seiten
- 18, 18': Rippe
- 19: Vertikalplatte
- 20: Reissverschluss
- 21: Handgriff
- 25: Profilgleiter
- 26: Verbindungselemente
- 27: Knotenelemente
- 30: Aufnahmeöffnung

## Patentansprüche

1. Hülle (1) mit Transportvorrichtung (5) für ein gefaltetes Zelt (7), **gekennzeichnet durch**
eine mantelförmig ausgebildete Hülle (1), in welche ein gefaltetes Zelt (7) verpackbar ist, wobei die Hülle (1) an einer Unterseite dauerhaft offen ist und in diesem Bereich mit mindestens einer Transportvorrichtung (5) verbunden ist,
wobei die Transportvorrichtung (5) zwei Räder (6) und eine mit der Hülle (1) verbundene Vertikalplatte (19) aufweist,
sowie eine mit der Vertikalplatte (19) verbundene Horizontalplatte (4, 4'), mit welcher ein in der Hülle (1) verpacktes Zelt (7) untergreifbar und abstützbar ist,
und einem im Bereich der Unterseite der Hülle (1) angeordneten Band (12), mit welchen ein in der Hülle (1) verpacktes Zelt (7) derart an der Hülle (1) mit Transportvorrichtung (5) haltbar ist, dass das Zelt (7) nicht von der Horizontalplatte (4, 4') abrutschen und aus der Hülle (1) rutschen kann.

2. Hülle mit Transportvorrichtung nach Anspruch 1, **dadurch gekennzeichnet, dass** die Horizontatptatte (4, 4') derart an der Transportvorrichtung angeordnet ist, dass mit ihr oberhalb von Zeltfüssen (15) eines gefalteten Zelts (7) Elemente des Zeltgestänges, wie zum Beispiel Profilgleiter (25), Verbindungs- (27) und Knotenelemente (26),untergreifbar sind.

3. Hülle mit Transportvorrichtung nach Anspruch 1 oder 2, **dadurch gekennzeichnet, dass** die Horizontalplatte (4, 4') derart ausgestaltet ist, dass die Eckpfosten (28) und/oder die Anteile des Zeltgestänges (25, 26, 27) einer Zeltseite eines in der Hülle (1) verpackten, gefalteten Zeltes (7) untergreifbar sind.

4. Hülle mit Transportvorrichtung nach einem der vorhergehenden Ansprüche, **dadurch gekennzeichnet, dass** je ein Rad (6) über eine Nabe oder Rohrachse (10) beidseitig mit der Transportvorrichtung (5) lösbar verbunden ist.

5. Hülle mit Transportvorrichtung nach einem der vorhergehenden Ansprüche, **dadurch gekennzeichnet, dass** die Hülle (1) entlang einer Längsseite oder einer Längskante mittels eines Reissverschlusses (20) oder eines Klettbandes verschliessbar ist.

6. Hülle mit Transportvorrichtung nach einem der vorhergehenden Ansprüche, **dadurch gekennzeichnet, dass** die Hülle (1) in einem oberen Bereich mit mindestens einem Handgriff (21) versehen ist.

7. Hülle mit Transportvorrichtung nach Anspruch 4, **dadurch gekennzeichnet, dass** die Räder (6) in einer Kammer (2) oben an der Hülle (1) lagerbar sind, wobei die Kammer (2) mit einem Deckel (3) versehen ist.

8. Hülle mit Transportvorrichtung nach einem der vorhergehenden Ansprüche, **dadurch gekennzeichnet, dass** zwei Transportvorrichtungen mit vier Rädern (6) vorgesehen sind.

9. Gefaltetes Zelt (7), verpackt in einer Hülle (1) mit Transportvorrichtung (5) nach einem der vorangehenden Ansprüche.

## Claims

1. A casing (1) with a transport device (5) for a folded tent (7),
**characterised by**
a casing (1) designed in a sheath-like manner, into which a folded tent (7) may be packed, wherein the casing (1) is permanently open at a lower side and is connected in this region to at least one transport device (5),
wherein the transport device (5) comprises two wheels (6) and a vertical plate (19) which is connected to the casing (1),
as well as a horizontal plate (4, 4') which is connected to the vertical plate (19) and with which a tent (7) packed in the casing (1) may be engaged beneath and supported,
and a belt (12) which is arranged in the region of the lower side of the casing (1) and with which a tent (7) packed in the casing (1) may be held on the casing (1) with the transport device (5), in a manner such that the tent (7) may not slip from the horizontal plate (4, 4') and slip out of the sleeve (1).

2. A casing with a transport device according to claim 1, **characterised in that** the horizontal plate (4, 4') is arranged on the transport device in a manner such that with it, one may engage beneath elements of the tent frame, such as profile glides (25), connection elements (27) and node elements (25), above the tent feet (15) of a folded tent (7).

3. A casing with a transport device according to claim 1 or 2, **characterised in that** the horizontal plate (4, 4') is designed in a manner such that one may engage beneath the corner posts (28) and/or the parts of the tent frame (25, 26, 27) of a tent side of a folded tent (7) packed in the casing (1).

4. A casing with a transport device according to one of the preceding claims, **characterised in that** in each case, a wheel (6) is releasably connected to the transport device (5) on both sides via a hub or tube axle (10).

5. A casing with a transport device according to one of the preceding claims, **characterised in that** the casing (1) may be closed along a longitudinal side or a longitudinal edge by way of a zip closure (20) or a Velcro-type closure.

6. A casing with a transport device according to one of the preceding claims, **characterised in that** the casing (1) is provided in the upper region with at least one hand grip (21).

7. A casing with a transport device according to claim 4, **characterised in that** the wheels (6) may be mounted in a chamber (2) at the top on the casing (1), wherein the chamber (2) is provided with a cover (3).

8. A casing with a transport device according to one of the preceding claims, **characterised in that** two transport devices with four wheels (6) are provided.

9. A folded tent (7) packed in a casing (1) with a transport device, according to one of the preceding claims.

## Revendications

1. Emballage (1) avec dispositif de transport (5) pour une tente pliée (7),
**caractérisé en ce que**
un emballage (1) formé en forme d'enveloppe (1), dans lequel une tente pliée (7) est susceptible d'être emballée, auquel cas l'emballage (1) est ouvert de manière permanente au niveau d'une partie inférieure et est relié dans ce secteur avec au moins un dispositif de transport (5),
auquel cas le dispositif de transport (5) présente deux roues (6) et une plaque verticale (19) reliée à l'emballage (1),
ainsi qu'une plaque horizontale (4, 4') reliée à la plaque verticale (19) et avec cette plaque horizontale (4, 4') une tente pliée (7), emballée dans l'emballage (1), est susceptible d'être saisie par le dessous et est susceptible d'être supportée,
et une bande (12) disposée dans le secteur de la partie inférieure de l'emballage (1) avec laquelle une tente (7) emballée dans l'emballage (1) est susceptible d'être saisie de telle façon au niveau de l'emballage (1) avec dispositif de transport (5) que la tente (7) ne peut pas tomber par glissement de la plaque horizontale (4, 4') et ne peut pas glisser hors de l'emballage (1).

2. Emballage avec dispositif de transport selon la revendication 1, **caractérisé en ce que** la plaque horizontale (4, 4') est agencée de telle manière sur le dispositif de transport qu'avec cette plaque horizontale (4, 4') des éléments de l'armature de la tente, comme par exemple une glissière profilée (25), des éléments de raccordement (27) et des éléments nodaux (26), sont susceptibles d'être saisis par le dessous au dessus des pieds de la tente (15) d'une tente pliée (7).

3. Emballage avec dispositif de transport selon la revendication 1 ou 2, **caractérisé en ce que** la plaque horizontale (4, 4') est arrangée de telle façon que les montants d'angle (28), et/ou les parties de l'armature de la tente (25, 26, 27) d'un côté de la tente d'une tente pliée (7) emballée dans l'emballage (1), sont susceptibles d'être saisis par le dessous.

4. Emballage avec dispositif de transport selon une des revendications précédentes, **caractérisé en ce qu'**une roue (6) est respectivement reliée des deux côtés de manière amovible avec le dispositif de transport (5) par un moyeu ou un axe tubulaire (10).

5. Emballage avec dispositif de transport selon une des revendications précédentes, **caractérisé en ce que** l'emballage (1) est susceptible d'être fermé le long d'un côté longitudinal ou d'une arête longitudinale à l'aide d'une fermeture à glissière (20) ou d'une bande auto-agrippante.

6. Emballage avec dispositif de transport selon une des revendications précédentes, **caractérisé en ce que** l'emballage (1) est équipé dans un secteur supérieur avec au moins une poigné (21) afin d'en faciliter le transport.

7. Emballage avec dispositif de transport selon la revendication 4, **caractérisé en ce que** les roues (6) sont logées dans une chambre (2) en haut sur l'emballage (1), auquel cas la chambre (2) est équipée d'un couvercle (3).

8. Emballage avec dispositif de transport selon une des revendications précédentes, **caractérisé en ce que** deux dispositifs de transport sont équipés avec 4 roues (6).

9. Tente pliée (7), emballée dans un emballage (1) avec dispositif de transport (5) selon une des revendications précédentes.
